# EUROPEAN PATENT SPECIFICATION

(11) **EP 0 960 490 B1**
(45) Date of publication and mention of the grant of the patent: **18.06.2014**
(21) Application number: 98956116.2
(22) Date of filing: 20.10.1998
(51) Int. Cl.: H04B 7/212

(54) **METHOD FOR ACQUISITION AND SYNCHRONIZATION OF TERMINALS IN A WIRELESS TDMA SYSTEM**
VERFAHREN ZUR ENDGERÄT ERFASSUNG UND SYNCHRONISATION IN EINEM DRAHTLOSEN MEHRFACHZUGRIFFSSYSTEM MIT ZEITVERSCHACHTELUNG
PROCEDE D'ACQUISITION ET DE SYNCHRONISATION DE TERMINAUX DANS UN SYSTEME A ACCES MULTIPLES PAR REPARTITION DANS LE TEMPS (AMRT) SANS FIL

(30) Priority: 20.10.1997 US 62496 P; 20.10.1997 US 62497 P; 20.10.1997 US 64673 P
(43) Date of publication of application: 01.12.1999
(73) Proprietor: ViaSat, Inc., Carlsbad, CA 92009-1699 (US)
(72) Inventor: AGARWAL, Anil, K., Gaithersburg, MD 20878 (US); THORNE, Charles, R., Rohrersville, MD 21779-0128 (US); BORKAR, Udayan, Narayan, Germantown, MD 20874 (US)
(74) Representative: CAPRI
(86) International application number: PCT/US1998/022053
(87) International publication number: WO 1999/021295

(56) References cited:
- US-A- 4 688 216
- US-A- 4 689 787
- US-A- 5 072 445
- US-A- 5 598 419

## Description

The present invention relates generally to communications systems and in particular to a technique to perform TDMA timing in a satellite, terrestrial wireless, and cable based systems.

Time Division Multiple Access (TDMA) is one of several techniques used to design distributed satellite, wireless, and cable based systems. A TDMA system provides a single communication channel that is efficiently shared among multiple geographically distributed communication terminals. In such a system, different terminals share a channel's bandwidth by transmitting on the channel with precisely timed short bursts of data. Because the timing for the bursts must be precise, the TDMA system provides each terminal with a very accurate time base. The time base is used to precisely time the terminal's transmissions into the channel so that the burst transmissions from different terminals do not overlap in time.

Each of the terminals must acquire the system timing so that the terminal can become synchronized with other terminals within the overall system. However, acquiring a lock to the system timing is difficult and can be lengthy. Furthermore, most systems have a large guard time which allow for uncertainty in timing among the different terminals. A large guard time is undesirable because of the resulting loss of usable bandwidth.

The problem of providing accurate timing is made difficult by a number of factors. First, different stations or terminals have different amounts of propagation delay between terminals. Second, the delay between terminals changes with time as the distance traversed by the transmission terminals changes. For example, in geo-synchronous satellite systems, the delay can be caused by imperfections in satellite orbit. In non-geo-synchronous satellite systems, the delay can be caused by the nature of the satellite orbit. In mobile satellite or terrestrial wireless systems the delay may be caused by the movement of the terminals. Finally, as terminals use a local clock to derive TDMA timing, inaccuracies and variations in the local clock can also cause TDMA timing to drift with the passage of time.

In addition, conventional satellite systems communicate on bursts within the frames which have preallocated parameters such as length, frequencies, and the location of the burst within a frame. These parameters are typically fixed at the terminals, and although they can be changed from time to time, they may not be dynamically allocated or reprogrammed, on the fly, by the network controller. As a result, the network system is rigid and not able to adapt to real-time changes in demand for bandwidth. Therefore, system resources are wasted due to the fixed or pre-established nature of the network architecture.

US 4 688 216 dsicloses a prior art system.

It is therefore an object of the invention to provide an improved acquisition and synchronization of all terminals in time, so that bursts transmitted by different terminals do not overlap in time, and that a burst transmitted by one terminal arrives at the appropriate time at the receiving terminal.

It is another object of the invention to enable bursts to be positioned close to one another (within a few microseconds) and assure that bursts from different terminals do not overlap in time. As a result, satellite delay variations of several milliseconds should be accommodated according to the invention.

It is yet another object of the invention to allow terminals to adjust their timing in a short period of time after they are turned on.

It is a further object of the invention to allow terminals to join the network without adversely impacting terminals that are actively carrying traffic in the network.

The present invention thus provides a system according to claim 1 and a method according to claim 28. Advantageous embodiments are provided in the dependent claims.

According to an exemplary embodiment of the invention a satellite or wireless based TDMA system uses a programmable, fixed-period frame structure. All bursts are timed with respect to this programmable periodic frame. Each terminal uses its local clock to generate a transmit frame period and a receive frame period. The start of a transmit frame period is known as Start of Transmit Frame. The start of a receive frame period is known as Start of Receive Frame. According to the invention, an Acquisition and Synchronization procedure is provided to align the start of transmit frame and start of receive frame at each terminal in such a way that if a burst is transmitted by any terminal at offset x after a local start of receive frame of the terminal, then all terminals receive that burst at position y after their local SORFs, where |y - x| is less than a small threshold value, for example, 5 microseconds.

In addition, the invention uses a number of bursts for communication between terminals. According to an embodiment of the invention, the various bursts are programmable. In other words, the parameters defining the bursts, such as length, frequency, and location within a frame may be reprogrammed by the network through communication with the terminals. As a result, the parameter may be dynamically allocated based on monitored network conditions. A number of different bursts are used for network communications. Reference Bursts are transmitted by reference terminals and are received by all traffic terminals. The Reference Bursts carry network management messages from the network command controller or reference terminal to all other terminals. Reference Bursts are also used by all receiving terminals to derive frame timing. Signaling bursts are transmitted by traffic terminals and received by the reference terminal. Signaling Bursts are used carry network management messages from the terminals to the network command controller or reference terminal. Traffic bursts are used to carry user traffic. Traffic Bursts are transmitted by traffic terminals and reference terminals and received by the traffic terminals and reference terminals. Acquisition bursts are used during transmit acquisition of traffic terminals. Acquisition Bursts are transmitted by traffic terminals and received by a reference terminal. Control bursts are used to maintain a traffic terminal transmit synchronization. Control Bursts are transmitted by traffic terminals and received by a reference terminal.

According to the present invention, the system is able to handle global, spot, and mixed mode beam configurations. In addition, the system is able to handle multiple spot beams, large numbers of terminals, multiple carriers, and multiple reference bursts. Furthermore, the procedures are simple, uniform, and robust and do not require special purpose hardware support. The system according the exemplary embodiments of the invention can also handle large doppler and local clock variations. As a result, the system is suitable for large delay satellite networks, as well as, low to medium delay terrestrial wireless and cable networks.

The system according to the present invention also provides that all parameters are programmable making it easy to modify and optimize communications for specific networks and real time condition. Procedures are controlled using message exchanges which are not hard assigned to specific frames. This considerably simplifies the implementation of this scheme. Furthermore, the receive acquisition algorithm, according to the various described embodiments of the invention, uses a fixed size aperture which can be stepped in a controlled fashion thereby reducing the probability of false detection of a unique word in the communication burst as the search or track process progresses. In marked contrast, prior techniques depended on pure chance for detection of the right unique word.

According to the exemplary embodiments of the invention, the procedure facilitates a very simple method for reference station switchover. Traffic terminals look at only a reference burst irrespective of which reference station it is transmitted by (if there are multiple reference stations for redundancy), which simplifies the traffic terminal procedure. Receive and Transmit corrections are smooth and orderly both during acquisition and synchronization. The correction information can be used to accurately measure the round trip time to the satellite, the Doppler, and clock inaccuracy. Terminals can be acquired in a live network, without disruption of existing traffic and without human intervention. The system also requires very small bandwidth overhead. Additionally, a fail safe procedure is provided whereby terminals automatically stop transmitting if sync is lost.

The foregoing and other features, objects, and advantages of the invention will be better understood by reading the following description in conjunction with the drawings, in which:
FIG. 1 shows an exemplary system configuration in a global beam mode according to an embodiment of the invention;
FIGS. 2 show an exemplary system configuration in a spot beam mode according to an embodiment of the invention;
FIG. 3 shows exemplary multiple reference bursts according to an embodiment of the invention;
FIG. 4 shows an exemplary TDMA frame structure according to an embodiment of the invention; and
FIG. 5 shows exemplary Dn relationships according to an embodiment of the invention.

The various features of the invention will now be described with respect to the figures, in which like parts are identified with the same reference characters.

### The TDMA Network Architecture

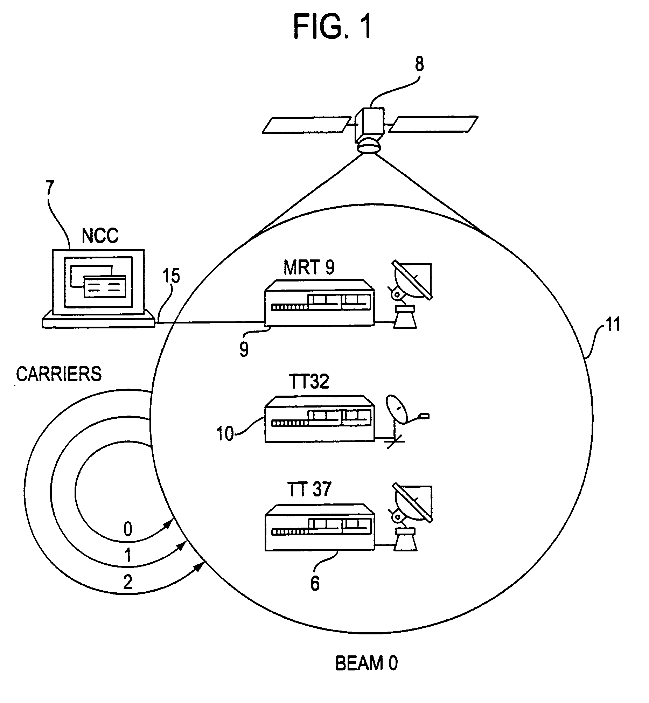

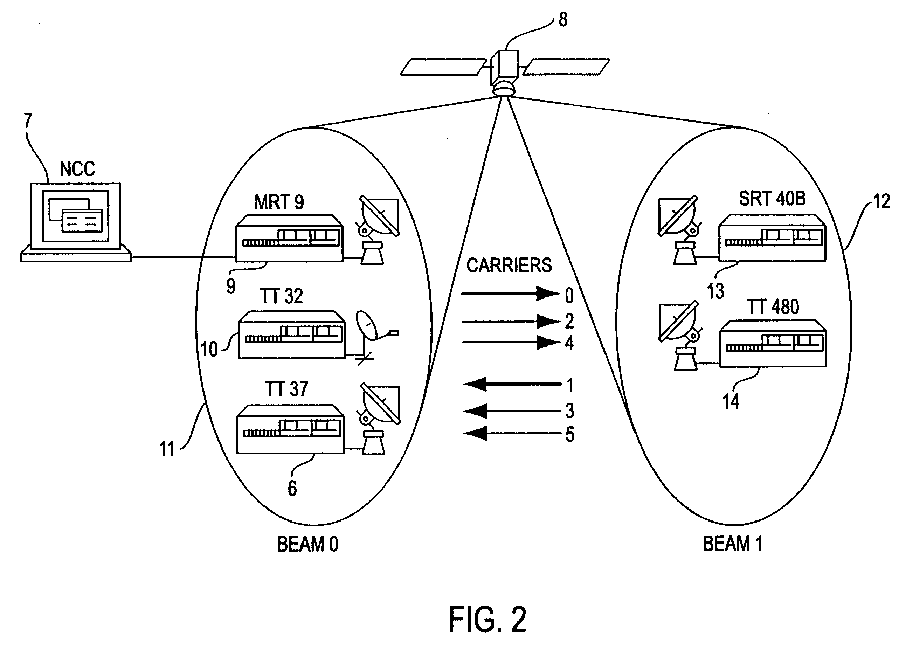

Turning to the exemplary embodiments shown in Figs. 1 and 2, a TDMA network architecture is illustrated. The network consists of a Network Control Center (NCC) 7 and TDMA terminals. The NCC 7 performs overall management and control of the network and does not carry user traffic. Terminals are connected to user telecommunications equipment and communicate with one another using wireless transmissions via the satellite. Some of the terminals in the network act as a source of timing for all other terminals. These are called reference terminals. All other terminals are called traffic terminals for example, terminals 6, 10, and 14.

The Master Reference Terminal (MRT) 9 acts as the primary source of timing for the entire network. For redundancy purposes, there may be an alternate master (AMRT) (not shown), which assumes the role of the MRT 9 if the MRT 9 fails. For networks which work in a spot-beam mode, as shown in FIG. 2, where the MRT 9 does not receive its own transmissions, a secondary reference terminal (SRT) 13 may be used. In this case the SRT 13 acts as a source of timing for all terminals in the same beam as the MRT 9 and the MRT 9 acts as a source of timing for all other terminals. There may also be an alternate secondary reference terminal (ASRT) (not shown) which assumes the role of the SRT 13 if the SRT 13 fails. The NCC may connect to the MRT 9 and the AMRT through a LAN interface 15. One skilled in the art will appreciate the NCC may be located with the MRT or at a remote location. According to one embodiment a SUN™ workstation may be used to implement the NCC.

### The TDMA Frame and Burst Structure

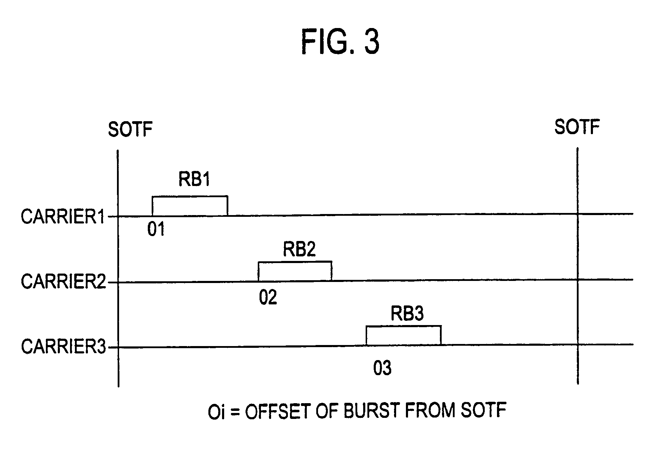

According to an embodiment of the invention as shown in Fig. 3, the satellite or wireless based TDMA system uses a programmable, fixed-period frame structure. All bursts are timed with respect to this periodic frame. Each terminal uses its local clock to generate a transmit frame period and a receive frame period. The start of a transmit frame period is defined as Start of Transmit Frame (SOTF). The start of a receive frame period is defined as Start of Receive Frame (SORF).

Each frame contains a series of bursts. A burst is a series of data bits transmitted by one terminal and received by one or more terminals. According to this method, there is a minimum dead-time between bursts which is defined as the guard time. The guard time allows for an amount of uncertainty in timing among the different terminals. In conventional systems the guard time is large and usually allocated in advance and is based on a worst case scenario for communications to ensure that signals transmitted on the bursts can be detected and not lost. However, a large guard time is undesirable because it results in loss of usable channel bandwidth. For example, for a geo-synchronous satellite with terminal-to-satellite delay variations of plus or minus 3 milliseconds per day, due to orbit imperfections, a guard-time of 12 milliseconds would be required to ensure that bursts do not overlap due to change in satellite delay. The present invention reduces this guard time to a few microseconds and as a result increases usable bandwidth through use of communication bursts as described below.

Bursts are classified into the following categories based on function. Reference Bursts (RB) are transmitted by reference terminals and are received by all traffic terminals. They carry network management messages from the NCC or reference terminals to all other terminals. RBs are also used by all receiving terminals to derive frame timing. Signaling bursts (SB) are transmitted by traffic terminals and received by the reference terminal. SBs are used carry network management messages from the terminals to the NCC or reference terminal. Traffic bursts (TB) are used to carry user traffic. TBs are transmitted by traffic terminals and reference terminals and received by the traffic terminals and reference terminals. Acquisition bursts (ABs) are used during transmit acquisition of traffic terminals. ABs are transmitted by traffic terminals and received by a reference terminals. Control bursts (CB) are used by the system to maintain a traffic terminal transmit synchronization. CBs are transmitted by traffic terminals and received by reference terminals.

According to the invention all bursts that are used for network management and control (RB, SB, CB, AB) have a uniform but programmable format. The network management bursts contain packets for control purposes. In addition, RBs also contain a frame ID. According to this exemplary embodiment the frame ID is a 16-bit number that is incremented for each frame. An important feature according to the present invention is that various bursts are all programmable by the system. In other words, unlike prior systems the parameters associated with bursts, such as length, frequency, and location within a frame, may be varied dynamically with changing system conditions. Because the parameters are not fixed for the various management bursts as in prior systems, the system according to the present invention may use available, prevailing system conditions, such as bandwidth, more efficiently.

All terminals in the network are synchronized so that the start of transmit frame instants coincide at the satellite. This is accomplished through use of an acquisition and synchronization procedure as is explained in further detail below. According to this embodiment, every terminal has a transmit burst time plan which defines all the bursts currently being transmitted by the terminal. Similarly, each terminal also has a receive burst time plan which includes all the bursts being received by the terminal. According to this embodiment bursts may be added or deleted at any time through use of the command bursts received at the terminal from the network controller. As a result, there is no requirement for the creation of time slots in which the bursts must be contained or fixed parameters to be associated with a burst.

A group of traffic terminals that can be addressed together as a multicast group is called a control group. Alternatively, terminals may also be partitioned into control groups for accessibility. The reference terminal transmits one RB to each control group. In this embodiment the RBs are on different carriers at different frequencies. As a result, the RBs are staggered in time since they cannot overlap in time at the reference station. However, the SOTF instant is identical across all carriers as show in Fig. 3. Unlike other prior TDMA systems, according to the present invention an RB can be located anywhere within a frame.

A burst consists of a preamble portion, a data portion, and a postamble portion. The preamble consists of a Carrier Bit Timing Recovery (CBTR) part and a unique word (UW) part. The preamble is used by the terminals to detect and synchronize to incoming bursts and allows the terminals to lock to the burst through identification of the UW . Each terminal has a two unique words saved in its memory. A first UW is used for reference bursts and a second UW is used for all other bursts. The words are global to the whole system and may be changed through communication with the NCC. According to the present invention the UWs should be chosen such that they appear to be random. In addition, the UWs should be different and as dissimilar to each other as possible in order to prevent a terminal from locking onto the wrong UW. Two Uws are used because during acquisition a terminal only needs to look for the reference burst and not for a traffic burst. This is an important feature of the invention because when a terminal is in the process of acquisition, other terminals in the network may be up and carrying traffic and the process acquisition should not interfere with normal network activity.

While a terminal is attempting to receive a burst, it compares what it identifies as the UW in the incoming burst with the UN stored in the terminal's memory. If the words match, then the UW is said to have been detected. According to this embodiment of the invention, the maximum number of mismatches that may be tolerated in declaring a UW detect is called the UW error threshold. At least two UW error thresholds are used according to the invention based on whether the terminal is operating during acquisition or normal operation. During acquisition it is important to be extremely sure that the terminal has actually locked to the right reference burst and not noise. Furthermore, during acquisition a terminal is searching for the reference burst in a much wider aperture and therefore is more susceptible to locking to unwanted noise. As a result, a smaller UW error threshold is needed in this case. On the other hand, during normal operation the burst will arrive in a much tighter aperture. In this case, a larger UW error threshold can be tolerated.

An aperture is a window of time in which a terminal looks for a burst. The aperture size is CBTR Size + UW Size + Guard Time. During normal operation a small guard time is desirable because acquisition has been established. If the guard time is small more bursts may be packed as closely together resulting in a more efficient utilization of available bandwidth since more bursts may used. According to this embodiment, an aperture with a small guard time is referred to as a TRACK aperture. During receive acquisition a wider aperture is used so that the reference burst can be quickly located. For this wider window a large guard time (close to the TDMA frame time) is used. Such an aperture with a large guard time is referred to as a SEARCH aperture. The apertures are described in further detail with regard to acquisition and synchronization.

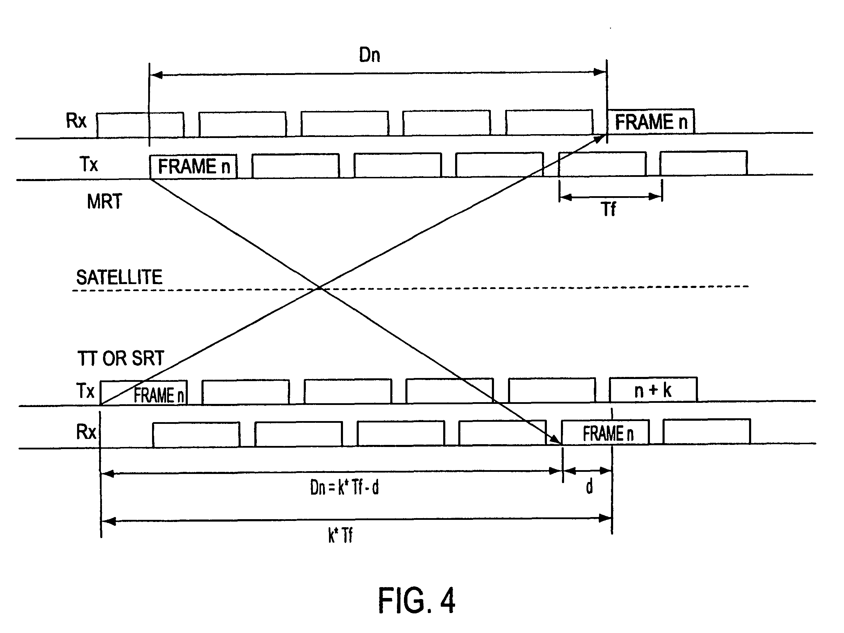

Turning to Figure 4 an exemplary structure of a frame is shown according to one embodiment of the invention. As shown in Fig. 4, a transmitting terminal transmits burst at frame position = BurstOffset. A receiving terminal receives a burst at frame position = BurstOffset +e where e = the UWOffset Error which is the time of arrival error. G = Guardtime of the received burst. It should be noted that the preceding and following bursts may have different guard time values. CBTRLen = Length of the CBTR sequence in symbols. UWLen = Length of the unique word in symbols. RxAperture Start = BurstOffset - GuardTime/2. RxApertureLen = CBTRLen + UWLen + GuardTime. UW Offset is measured from the start of the aperture. Expected UW offset = G/2 + CBTRLen + UWLen.

During network acquisition and synchronization the following procedures are used: Master Reference Terminal (MRT) Transmit procedure; Receive Acquisition and Synchronization procedure (for both reference and traffic terminals); Secondary Reference Terminal (SRT) Transmit procedure; and Traffic Terminal (TT) Transmit procedure. These procedures are described in detail below.

### Master Reference Terminal (MRT) Transmit Procedure

When the MRT is down, which includes network startup, the NCC sends a command to the MRT to start its transmit procedure. Upon receiving the command to start its transmit procedure, the MRT starts its transmit frame timing at some arbitrary point in time. This frame time is derived using the local MRT clock and is never re-adjusted. The MRT should have a stable clock, for example, a 1O⁹ppm or better may be used according to this embodiment of the invention. The reference burst is then transmitted every frame in its correct position. The reference burst contains a frame ID which is set to 0 at network startup and incremented thereafter on every frame. The MRT will stay in transmit sync as long as the MRT continues to get a "Continue MRT transmit procedure" command from the NCC. If these commands stop then the MRT times out and stops its transmission. If there are multiple reference bursts, the MRT transmits all of them while in transmit sync as illustrated in Fig. 3.

### Receive Acquisition and Synchronization Procedure

All terminals, including the RTs, perform this procedure on startup. In order to perform receive acquisition, the terminal needs to have the definition of its reference burst, which includes its position in the TDMA frame, frequency, coding, data size, parameters, etc.

The terminal starts its receive frame timing at some arbitrary point in time and starts generating SORFs. The terminal then looks for the reference burst in its receive frame with the SEARCH aperture. In this case, the UW error threshold is set to a small value and the hardware is programmed to look for the reference burst UW. According to this exemplary embodiment a UW error threshold of zero may be used.

While the terminal is in the search mode, if the UW is not detected for N frames, the start of receive frame and therefore the start of SEARCH aperture is advanced by a fraction of the frame time and the search is then repeated According to one preferred embodiment the frame time is advanced by 20% for each iteration. On the other hand, if the UW is detected, the terminal then enters a confirm mode during which the terminal verifies that it has locked to the right reference burst. According to this embodiment, the terminal no longer looks for the RB with the SEARCH aperture. The terminal adjusts its SORF so that the expected UW position matches the measured UW position. Finally, the terminal again looks for the RB, however, this time it uses the TRACK aperture. The TRACK aperture is positioned at the expected UW position of the reference burst. The terminal then verifies the following:
(1) the UW is detected in the track aperture;
(2) the data in the burst is being received without any errors (for example, using the Reed-Solomon Check bits, or a CRC check, or some other means of error detection); and
(3) the frame number received in the reference burst increments every frame.
If any of the above three conditions fail, the terminal concludes that the expected UW was falsely detected and adjusts the start of receive frame so that the aperture begins after the false detect and then restarts the acquisition procedure. By starting the new aperture just beyond the falsely detected UW, the terminal steps over the false UW and thereby reduces the chance of finding the false UW again.

If the UW is detected in the confirm mode, the terminal adds all other bursts in its receive burst time plan (BTP) to its receive frame. The terminal's receive frame ID (RFID) is then set to the value received in the reference burst and the terminal is now in receive synchronization. The RFID will be incremented every frame while the terminal is in synchronization.

While the terminal is in receive synchronization, the terminal measures the UW offset for the reference burst. When the UW exceeds a threshold, the terminal then adjusts the SORF so that the measured offset matches the expected offset. According to this exemplary embodiment, the threshold is a small fraction of the guard time for example 10%. At this time the UW error threshold can be set to the higher value. The frame ID received in the reference burst is then checked against the local RFID. If the RFID does not match, or if no reference burst is correctly received for T seconds, the terminal loses receive synchronization and starts the procedure all over again. According to this embodiment the RFID may be placed at the beginning of the reference burst.

### Secondary Reference Terminal (SRT) Transmit procedure

According to another embodiment of the invention, when the SRT is down (which includes network startup), once the MRT transmit procedure is operational, the NCC periodically sends a command to the SRT to start its transmit procedure. The command is transmitted as a message in the reference burst. When the SRT attains receive synchronization, the SRT receives this command and starts its transmit procedure.

According to this procedure, the SRT starts its transmit frame at an offset d with respect to its receive frame and sets a local counter called the transmit frame ID (TFID). The TFID is incremented every transmit frame and is sent in the reference burst transmitted by the SRT. The values for d and the TFID are computed as follows.

Da is an estimate of the round trip delay from the SRT to satellite. This delay can be estimated from the positions (latitude, longitude, and altitude) of the terminal and satellite. In the following equations k is an integer, Da and Frame Time are in the same units (e.g., milliseconds).

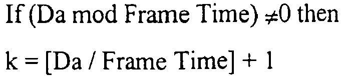

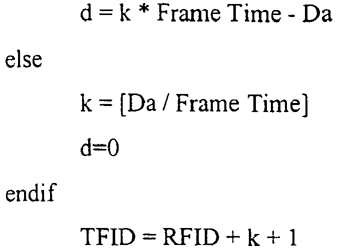

Once the transmit frame has been started the SRT is in transmit synchronization. While in transmit synchronization the SRT attempts to keep its Da fixed by adjusting the start of its transmit frame (SOTF) as follows.

Compute Dn as follows (where d is the measured offset between SORF and SORT at the SRT):

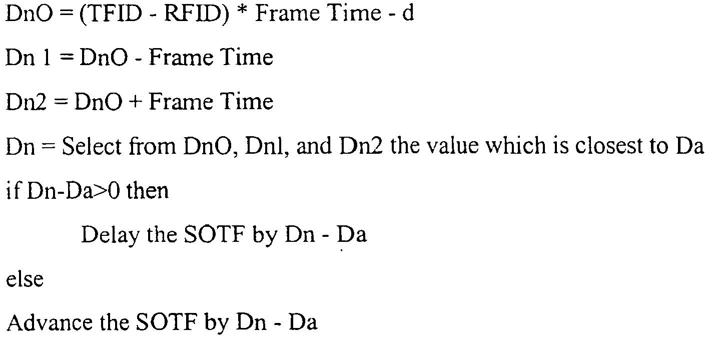

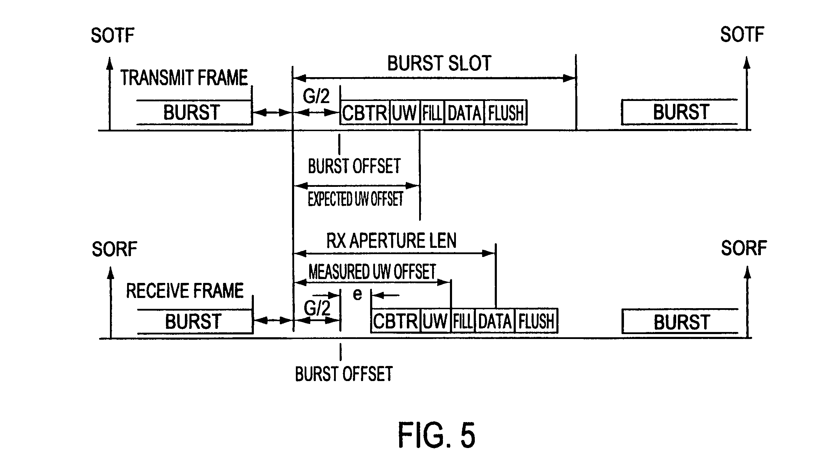

Turning to the exemplary embodiment shown in Fig. 5, various Dn relationships are illustrated. As shown in Fig. 5 Tf is the frame time.

The SRT stays in transmit synchronization as long as the SRT continues to get a "Keep SRT transmit procedure going" command from the NCC. When these commands stop, the SRT transmit procedure times out and stops transmission. While in transmit synchronization, the SRT also transmits one or more RBs.

### Traffic Terminal (TT) Transmit Procedure

The traffic terminal transmit procedure starts off under NCC control after the terminal has attained receive synchronization. In order to obtain transmit acquisition, special bursts called acquisition bursts (AB) are used. The ABs are transmitted by the traffic terminal that is being transmit acquired and received by the reference station. The ABs have a relatively large guard time (e.g., on the order of millisecs). One skilled in the art will appreciate that the exact guard time required depends on the satellite station keeping the accuracy of the current position of the satellite and the position of the traffic terminal. As these positions are better defined the guard time required decreases.

According to this embodiment of the invention, the NCC has a pool of Abs that may be used by the traffic terminals. In order to transmit acquire a traffic terminal the NCC picks a free AB from the pool and sends an ACQCMD message to the traffic terminal. The ACQCMD message contains the definition of the AB to be used by the traffic terminal including its location within the frame, size, frequency, etc. Until this command is received, the traffic terminal does not transmit. However, upon receiving the ACQCMD, the traffic terminal starts its transmit frame at offset d with respect to its receive frame and sets its initial TFID as follows.

According to this embodiment Da is an estimate of the round trip delay from the traffic terminal to the satellite. The delay can be estimated from the positions (latitude, longitude, and altitude) of the terminal and satellite. As represented in the computation below k is an integer, Da, and Frame Time are in the same units (e.g., milliseconds).

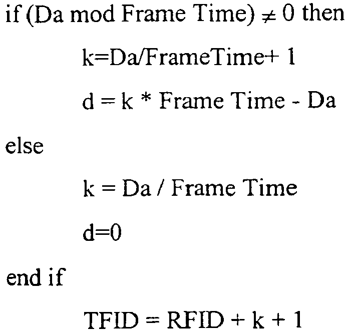

The traffic terminal then transmits N responses in N successive frames. The responses are defined as ACQRESP. Each ACQRESP contains the traffic terminal's ID, its TFID, and its current Dn estimate. The TFID is incremented every transmit frame. However, it should be noted that the AB is transmitted only when the ACQRESPs are being sent. After transmitting these responses the traffic terminal starts a timer and waits for a synchronization command (SYNCCMD) from the NCC. When the reference terminal receives the ACQRESPs from a traffic terminal, the reference terminal forwards them to the NCC along with the error in UW offset. When the NCC receives a ACQRESP it sends a UW error and TFID correction to the traffic terminal in a SYNCCMD.

When the SYNCCMD is received by the traffic terminal, the traffic terminal applies the UW error correction to its SOTF. The traffic terminal also applies the TFID correction to its TFID and then enters transmit synchronization. At this time the traffic terminal adds all bursts in its transmit burst time plan to its transmit frame. This includes a control burst which is used to maintain transmit synchronization. If the SYNCCMD is not received and the timer expires at the traffic terminal, the traffic terminal stops its transmit frame and waits for an ACQCMD from the NCC.

According to this embodiment of the invention the AB does not have to be assigned to the traffic terminal for the entire round trip time required to issue an ACQCMD and send a response back. In contrast, the AB just has to be reserved for those frames when the traffic terminal is expected to send ACQRESP messages. As a result, pipelining of the traffic terminals is allowed which in turn helps to reduce network acquisition time after a network crash, for example.

Once in transmit synchronization, the traffic terminal transmits a control burst (CB) in order to maintain synchronization. A CB is transmitted once every C frames which is defined as a control frame. The size of the control frame or C is selected based on the drift in time caused by satellite motion. In order to prevent drifting in time during communication, that will cause the terminal to lose its synchronization, a CB is sent to the NCC and back in order to make the necessary correction in timing. According to a preferred embodiment of the invention, C is picked such that the traffic terminal has not drifted in time more than 5 microseconds. However, one skilled in the art will appreciate that this time will depend on the type of network and satellites used and therefore may be adjusted accordingly.

The control burst contains a message containing the terminal's ID, its current Dn estimate, and the TFID. The reference terminal upon receiving the CB message, measures the UW offset error and the difference between the TFID in the message and the local RFID of the reference station. The reference terminal then sends a response back to the traffic terminal with a timing correction and a TFID correction. The original message is sent to the NCC along with the UW offset error and the TFID error. This allows the NCC to determine if a terminal is up in addition to the terminal's current Dn estimate. Upon receiving the response, if a round trip time has expired since the last time the traffic terminal applied a correction to its transmit frame, the traffic terminal applies the new timing correction to its transmit frame. The TFID should never have to be corrected; however, if this happens the terminal loses transmit synchronization. Furthermore, If n responses from the reference terminal are lost, the terminal also loses transmit synchronization. When transmit sync is lost the terminal disables transmission of all bursts and waits for the next ACQCMD.

One skilled in the art will appreciate that the procedures described above can be implement in software in the network command control, reference terminals, and traffic terminals, respectively.

According to the present invention, the system is able to handle global, spot, and mixed mode beam configurations. In addition, the system is able to handle multiple spot beams, large numbers of terminals, multiple carriers, and multiple reference bursts. Furthermore, the procedures are simple, uniform, and robust and do not require special purpose hardware support. The system according the exemplary embodiments of the invention can also handle large doppler and local clock variations. As a result the system is suitable for large delay satellite networks as well as low to medium delay terrestrial wireless and cable networks.

The system according to the present invention also provides that all parameters are programmable making it easy to modify and optimize bursts, timing and communication between terminals for specific networks. Procedures are controlled using message exchanges which are not hard assigned to specific frames. This considerably simplifies the implementation of this scheme according to the invention. Furthermore, the receive acquisition algorithm, according to the various described embodiments of the invention, uses a fixed size aperture which can be stepped in a controlled fashion thereby reducing the probability of false detects as the algorithm progresses. In marked contrast, prior techniques depended on pure chance for detection of the right unique word.

According to the exemplary embodiments of the invention, the procedure facilitates a very simple method for reference station switchover. Traffic terminals look at only a reference burst irrespective of which reference station it is transmitted by (if there are multiple reference stations for redundancy), which simplifies the traffic terminal procedure. Receive and Transmit corrections are smooth and orderly both during acquisition and synchronization. The correction information can be used to accurately measure the round trip time to the satellite, the Doppler and clock inaccuracy. Finally, terminals can be acquired in a live network, without disruption of existing traffic and without human intervention. The system also requires very small bandwidth overhead. Additionally, a fail safe procedure is provided whereby terminals automatically stop transmitting if synchronization is lost.

## Claims

1. A time division multiple access (TDMA) wireless communications system comprising:
a communications terminal (TT) (6, 10, 14) for communicating signals on bursts within a TDMA frame; and
a controller (NCC) (7) for coordinating communications by said terminal (6, 10, 14), wherein the terminal (6, 10, 14) comprises:
means for generating a receive frame time at an arbitrary point in time,
means for generating a search aperture for a reference burst within said receive frame,
means for generating a transmit frame period and receive frame period based on finding said reference burst within said search aperture,
wherein each terminal (6, 10, 14) has a transmit burst time plan which defines all the bursts currently being transmitted by the terminal and a receive burst time plan which includes all the bursts being received by the terminal, such that bursts are added or deleted at any time through use of the command bursts received at the terminal (6, 10, 14) from said controller (7).

2. The system of claim 1, wherein said terminal (6, 10, 14) searches for a unique word within said receive frame and advances said search aperture by a fraction of the frame time if said unique word is not found and repeating the search.

3. The system of claim 2, wherein said terminal (6, 10, 14) adjusts said receive frame time based on said unique word if said unique word is found within said frame and searches for said reference burst using a track aperture, said track aperture being positioned at the expected position of said unique word of said reference burst.

4. The system of claim 3, wherein said terminal (6, 10, 14) searches for said unique word in the track aperture and determines if data being received in the reference burst is error free and if a frame number in said reference burst is incremented in each frame, whereby if any of said three steps fails, said terminal (6, 10, 14) adjusts the start of receive frame to begin after a falsely detected unique word and repeats the step of searching for a unique word.

5. The system of claim 1, wherein said controller (7) is operative to pick an unused acquisition burst from a pool of acquisition bursts and transmit an acquisition command from said controller (7) to said terminal (6, 10, 14) including the parameters for said picked acquisition burst and after receiving said acquisition command at said terminal (6, 10, 14), generate a transmit frame offset and transmit frame ID at the terminal (6, 10, 14) and transmit an acquisition response from said terminal (6, 10, 14) to said controller (7), whereby said acquisition response includes the terminal's (6, 10, 14) ID, transmission frame ID and current delay estimate.

6. The system of claim 5, wherein said terminal (6, 10, 14) includes a timer and said timer is started after sending said acquisition response.

7. The system of claim 6, wherein said controller (7) receives said acquisition response and transmits a synchronization command including a unique word error and transmission frame ID correction to the traffic terminal (6, 10, 14), whereby if said synchronization command is received by the terminal (6, 10, 14) the terminal (6, 10, 14) applies the transmission frame ID correction to its transmission frame ID and begins transmit synchronization.

8. The system of claim 7, wherein if said terminal (6, 10, 14) does not receive said synchronization command said timer times out and said terminal (6, 10, 14) waits for another acquisition command.

9. The system of claim 7, wherein said terminal (6, 10, 14) maintains synchronization by transmitting control bursts to said controller (7).

10. A time division multiple access wireless communications system as claimed in claim 1, wherein
said system further comprises a reference terminal (9) connected to said controller (7) for transmitting and receiving said signals on said bursts, wherein said bursts have parameters which may be dynamically changed by said controller (7).

11. The system of claim 10, wherein said parameters may be changed substantially in real time.

12. The system of claim 11, wherein said parameters include one of length, frequency, or location within a frame.

13. The system according to claim 10, wherein said reference terminal (9) transmits a reference burst to said communications terminal (6, 10, 14) and said reference burst is used to derive network timing at said communications terminal (6, 10, 14) and said reference burst may be located anywhere within the transmission frame.

14. The system of claim 13, wherein the frame is a programmable, fixed period frame.

15. The system of claim 13, wherein said communications terminal (6, 10, 14) includes a local clock and generates a transmit frame period and receive frame period in response to said reference burst.

16. The system of claim 13 further comprising:
a plurality of communications terminals (6, 10, 14), wherein said plurality of terminals (6, 10, 14) are partitioned into control groups and said reference terminal (9) transmits a separate reference burst to each control group, each said separate reference burst being transmitted on different carriers (0, 1, 2, 3, 4, 5) at a different frequency and not overlapping in time with each other.

17. The system of claim 16, wherein said plurality of terminals (6, 10, 14) include a local clock and generate a start of transmit frame period and receive of transmit frame period in response to said reference burst and said start of transmit frame period is identical across said different carriers (0, 1, 2, 3, 4, 5).

18. The system of claim 13, wherein said communications terminal (6, 10, 14) determines a window of time in which to look for a burst.

19. The system of claim 18, wherein said communications terminal (6, 10, 14) generates a search window having a first guard time when said terminal (6, 10, 14) is acquiring synchronization to said network system and generates a track window having a second guard time that is smaller than said first guard time once synchronization is acquired.

20. The system of claim 18, wherein said reference burst includes a unique word portion and said communication terminal (6, 10, 14) search for said unique word in said aperture and detects said unique word if a unique word stored at said communication terminal (6, 10, 14) matches unique word found in said aperture.

21. The system of claim 20, wherein the maximum number of mismatches allowed for detecting a unique word is set as a first threshold or a second threshold and said first threshold is used during acquisition of system timing, said second threshold is used after acquisition has been established, where said first threshold is smaller than said second threshold.

22. The system of claim 13, wherein the system uses first and second unique words, and said first unique word is used in a reference burst and said second unique word is used in all other bursts.

23. The system of claim 10, wherein said bursts include a reference burst transmitted by said reference terminal (9) and are received by said communications terminal (6, 10, 14) carrying network management messages from said network command controller (7) and are also used by all receiving terminals (6, 10, 14) to derive frame timing.

24. The system of claim 10, wherein said bursts include a signaling burst transmitted by said communications terminal (6, 10, 14) and are used to carry network management messages from the communications terminal (6, 10, 14) to said network command controller (7) or said reference terminal (9).

25. The system of claim 10, wherein said bursts include a traffic burst which are transmitted by said communications terminal (6, 10, 14) and reference terminal (9) and received by said communications terminal (6, 10, 14) and reference terminal (9) and carry traffic data.

26. The system of claim 10, wherein said bursts include an acquisition burst used during transmit acquisition of communications terminal (6, 10, 14), said acquisition burst being transmitted by said communications terminal (6, 10, 14) and received by said reference terminal (9).

27. The system of claim 10, wherein said bursts include a control burst which maintains a traffic terminal (6, 10, 14) transmit synchronization.

28. A method for synchronization of a communications terminal (6, 10, 14) in a wireless TDMA communications system having a controller (7), comprising the steps of:
generating a receive frame time at an arbitrary point in time;
generating a search aperture;
searching for a reference burst within said receive frame using said search aperture;
generating a transmit frame period and receive frame period based on finding said reference burst within said search aperture,
wherein each terminal (6, 10, 14) has a transmit burst time plan which defines all the bursts currently being transmitted by the terminal and a receive burst time plan which includes all the bursts being received by the terminal, such that bursts are added or deleted at any time through use of the command bursts received at the terminal (6, 10, 14) from said controller (7).

29. The method of claim 28 wherein the step of searching for said reference burst further comprises the steps of:
searching for a unique word within said receive frame; and
advancing said search aperture by a fraction of the frame time if said unique word is not found and repeating said search.

30. The method of claim 29 further comprises the steps of:
adjusting said receive frame time based on said unique word if said unique word is found with said frame; and
searching for said reference burst using a track aperture, wherein said track aperture is positioned at the expected position of said unique word of said reference burst.

31. The method of claim 30 further comprising the three steps of:
searching for said unique word in track aperture;
determining if data being received in the reference burst is error free; and
determining if a frame number in said reference burst is increments each frame, wherein if any of said three steps fail, said terminal (6, 10, 14) adjusts the start of receive frame to begin after a falsely detected unique word and repeating the step of searching for a unique word.

32. A method for synchronization of a communications terminal (6, 10, 14) as recited in claim 28, further comprising acquisition of a terminal (6, 9, 10, 13, 14) using the steps of:
picking an unused acquisition burst from a pool of acquisition bursts;
transmitting an acquisition command from the controller (7) to the terminal (6, 9, 10, 13, 14) including the parameters for said picked acquisition burst;
after receiving the acquisition command at the terminal (6, 9, 10, 13, 14), generating a transmit frame offset and transmit frame ID at the terminal (6, 9, 10, 13, 14);
transmitting an acquisition response from the terminal (6, 9, 10, 13, 14) to the controller (7), wherein said acquisition response includes the terminal's (6, 9, 10, 13, 14) ID, transmission frame ID and current delay estimate.

33. The method of claim 32 further comprising the steps of:
starting a timer at the terminal (6, 9, 10, 13, 14);
receiving said acquisition response at the controller (7); and
transmitting a synchronization command including a unique word error and transmission frame ID correction to the traffic terminal (6, 10, 14), wherein if said synchronization command is received by the terminal (6, 9, 10, 13, 14) the terminal (6, 9, 10, 13, 14) applies the transmission frame ID correction to its transmission frame ID and begins transmit synchronization.

34. The method of claim 33, wherein if said terminal (6, 9, 10, 13, 14) does not receive said synchronization command and said timer times out, the terminal (6, 9, 10, 13, 14) waits for another acquisition command.

35. The method of claim 34, wherein the terminal (6, 9, 10, 13, 14) maintains synchronization by transmitting control bursts.

## Patentansprüche

1. Zeitvielfachzugriff (TDMA) drahtloses Kommunikationssystem, umfassend:
ein Kommunikationsterminal (TT) (6, 10, 14) zum Kommunizieren von Signalen auf Bursts innerhalb eines TDMA-Rahmens, und
einen Kontroller (NCC) (7) zum Koordinieren von Kommunikationen über das Terminal (6, 10, 14), wobei das Terminal (6, 10, 14) aufweist:
Mittel zum Erzeugen einer Empfangsrahmenzeit an einem beliebigen Zeitpunkt,
Mittel zum Erzeugen einer Suchöffnung für ein Referenzburst innerhalb des Empfangsrahmens,
Mittel zum Erzeugen einer Übertragungsrahmenperiode und einer Empfangsrahmenperiode, basierend auf Auffinden, dass der Referenzburst innerhalb der Suchöffnung ist,
wobei jedes Terminal (6, 10, 14) einen Übertragungsburstzeitplan aufweist, der alle Bursts definiert, die aktuell durch das Terminal übertragen werden, und einen Burstzeitplan empfängt, der alle Bursts beinhaltet, die von dem Terminal empfangen werden, so dass Bursts hinzugefügt oder gelöscht werden an jedem Zeitpunkt durch Verwendung der Befehlbursts, die an dem Terminal (6, 10, 14) von dem Kontroller (7) empfangen werden.

2. System nach Anspruch 1, wobei das Terminal (6, 10, 14) nach einem eindeutigen Wort innerhalb des Empfangsrahmens sucht und die Suchöffnung vorwärts bewegt durch einen Teil der Rahmenzeit, wenn das eindeutige Wort nicht gefunden wird, und die Suche wiederholt.

3. System nach Anspruch 2, wobei das Terminal (6, 10, 14) die Empfangsrahmenzeit abgleicht basierend auf dem eindeutigen Wort, wenn das eindeutige Wort innerhalb des Rahmens gefunden wird, und nach einem Referenzburst sucht unter Verwendung einer Verfolgungsöffnung, wobei die Verfolgungsöffnung positioniert wird an der erwarteten Position des eindeutigen Worts des Referenzbursts.

4. System nach Anspruch 3, wobei das Terminal (6, 10, 14) nach dem eindeutigen Wort in der Suchöffnung sucht und bestimmt, ob in dem Referenzburst empfangene Daten fehlerfrei und ob eine Rahmennummer in dem Referenzburst in jedem Rahmen inkrementiert ist, wobei, wenn einer der drei Schritte fehlschlägt, das Terminal (6, 10, 14) den Start des Empfangsrahmens abgleicht, um nach einem falsch detektierten eindeutigen Wort anzufangen, und den Schritt des Suchens nach einem eindeutigen Wort wiederholt.

5. System nach Anspruch 1, wobei der Kontroller (7) dahingehend funktioniert, einen unverwendeten Acquisitionsburst aus einem Pool von Acquisitionsbursts herauszuwählen und einen Acquisitionsbefehl von dem Kontroller (7) an das Terminal (6, 10, 14) zu übermitteln einschließlich der Parameter für den ausgewählten Acquisitionsburst und nach Empfangen des Acquisitionsbefehls an dem Terminal (6, 10, 14), einen Übertragungsrahmenversatz zu erzeugen und Rahmen-ID an das Terminal (6, 10, 14) zu übermitteln und eine Acquisitionsantwort von dem Terminal (6, 10, 14) an den Kontroller (7) zu übermitteln, wodurch die Acquisitionsantwort die Terminal-(6, 10, 14) -ID, die Übertragungsrahmen-ID und die aktuelle Verzögerungsabschätzung aufweist.

6. System nach Anspruch 5, wobei das Terminal (6, 10, 14) einen Zeitschalter aufweist und der Zeitschalter gestartet wird nach dem Senden der Acquisitionsantwort.

7. System nach Anspruch 6, wobei der Kontroller (7) die Acquisitionsantwort empfängt und einen Synchronisationsbefehl einschließlich einem eindeutigen Wortfehler und einer Übertragungsrahmen-ID-Korrektur an das Verkehrsterminal (6, 10, 14) überträgt, wobei, wenn der Synchronisationsbefehl von dem Terminal (6, 10, 14) empfangen wird, das Terminal (6, 10, 14) die Übertragungsrahmen-ID-Korrektur auf seine Übertragungsrahmen-ID anwendet und mit der Übertragungssynchronisation beginnt.

8. System nach Anspruch 7, wobei, wenn das Terminal (6, 10, 14) den Synchronisationsbefehl nicht empfängt, der Zeitgeber AUS schaltet und das Terminal (6, 10, 14) auf einen anderen Acquisitionsbefehl wartet.

9. System nach Anspruch 7, wobei das Terminal (6, 10, 14) die Synchronisation beibehält durch Übertragung von Steuerbursts auf den Kontroller (7).

10. Zeitvielfachzugriff drahtloses Kommunikationssystem nach Anspruch 1, wobei
das System weiterhin aufweist ein Referenzterminal (9), das mit dem Kontroller (7) verbunden ist zum Übertragen und Empfangen der Signale bezüglich der Bursts, wobei die Bursts Parameter aufweisen, die dynamisch verändert werden können von dem Kontroller (7).

11. System nach Anspruch 10, wobei die Parameter im Wesentlichen in Echtzeit verändert werden können.

12. System nach Anspruch 11, wobei die Parameter eines von einer Länge, einer Frequenz oder einem Ort innerhalb eines Rahmens aufweisen.

13. System nach Anspruch 10, wobei das Referenzterminal (9) einen Referenzburst zu dem Kommunikationsterminal (6, 10, 14) überträgt und der Referenzburst verwendet wird, um eine Netzwerktaktung an dem Kommunikationsterminal (6, 10, 14) abzuleiten und der Referenzburst irgendwo innerhalb des Übertragungsrahmens angeordnet sein kann.

14. System nach Anspruch 13, wobei der Rahmen ein programmierbarer Rahmen mit fester Periode ist.

15. System nach Anspruch 13, wobei das Kommunikationsterminal (6, 10, 14) eine lokale Uhr aufweist und eine Übertragungsrahmenperiode und eine Empfangsrahmenperiode erzeugt als Reaktion auf das Referenzburst.

16. System nach Anspruch 13, weiterhin aufweisend:
eine Vielzahl von Kommunikationsterminals (6, 10, 14),
wobei die Vielzahl von Terminals (6, 10, 14) unterteilt ist in Steuergruppen und das Referenzterminal (9) ein separates Referenzburst an jede Steuergruppe überträgt,
wobei jedes separate Referenzburst auf unterschiedliche Träger (0, 1, 2, 3, 4, 5) übertragen wird auf einer unterschiedlichen Frequenz und nicht überlappend in der Zeit miteinander.

17. System nach Anspruch 16, wobei die Vielzahl von Terminals (6, 10, 14) eine lokale Uhr beinhalten und einen Start der Übertragungsrahmenperiode erzeugen und die Übertragungsrahmenperiode empfangen als Reaktion auf das Referenzburst und der Start der Übertragungsrahmenperiode identisch ist über die unterschiedlichen Träger (0, 1, 2, 3, 4, 5).

18. System nach Anspruch 13, wobei das Kommunikationsterminal (6, 10, 14) ein Zeitfenster bestimmt, in dem nach einem Burst zu suchen ist.

19. System nach Anspruch 18, wobei das Übertragungsterminal (6, 10, 14) ein Suchfenster erzeugt mit einem ersten Schutzintervall (Guard Time), wenn das Terminal (6, 10, 14) Synchronisation mit dem Netzwerksystem erlangt, und ein Suchfenster erzeugt mit einem zweiten Schutzintervall (Guard Time), das kleiner ist als das erste Schutzintervall (Guard Time), nachdem die Synchronisation erlangt ist.

20. System nach Anspruch 18, wobei der Referenzburst einen eindeutigen Wortteil beinhaltet und das Kommunikationsterminal (6, 10, 14) nach dem eindeutigen Wort in der Öffnung sucht und das eindeutige Wort detektiert, wenn ein eindeutiges Wort in dem Kommunikationsterminal (6, 10, 14) gespeichert ist, das mit dem eindeutigen Wort übereinstimmt, das in der Öffnung gefunden wurde.

21. System nach Anspruch 20, wobei die maximale Anzahl von Nichtübereinstimmungen, die zum Detektieren eines eindeutigen Wortes erlaubt ist, als ein erster Grenzwert oder ein zweiter Grenzwert gesetzt wird und der erste Grenzwert verwendet wird während der Acquisition der Systemtaktung, der zweite Grenzwert verwendet wird, nachdem die Acquisition hergestellt wurde, wobei der erste Grenzwert kleiner ist als der zweite Grenzwert.

22. System nach Anspruch 13, wobei das System erste und zweite eindeutige Worte verwendet und das erste eindeutige Wort verwendet wird in einem Referenzburst und das zweite eindeutige Wort verwendet wird in allen anderen Bursts.

23. System nach Anspruch 10, wobei die Bursts einen Referenzburst aufweisen, der von dem Referenzterminal (9) übertragen wird, und empfangen werden von dem Kommunikationsterminal (6, 10, 14), das Netzwerkmanagementbotschaften trägt von dem Netzwerkbefehlskontroller (7), und auch verwendet werden von allen Empfangsterminals (6, 10, 14), um die Rahmentaktung abzuleiten.

24. System nach Anspruch 10, wobei die Bursts ein Signalburst beinhalten, das von dem Kommunikationsterminal (6, 10, 14) übertragen wird, und verwendet werden, um Netzwerkmanagementbotschaften von dem Kommunikationsterminal (6, 10, 14) zu dem Netzwerkbefehlskontroller (7) oder dem Referenzterminal (9) zu tragen.

25. System nach Anspruch 10, wobei die Bursts ein Verkehrsburst beinhalten, die übertragen werden von dem Kommunikationsterminal (6, 10, 14) und dem Referenzterminal (9) und empfangen werden von dem Kommunikationsterminal (6, 10, 14) und dem Referenzterminal (9) und Verkehrsdaten tragen.

26. System nach Anspruch 10, wobei die Bursts einen Acquisitionsburst beinhalten, der verwendet wird während Acquisition des Kommunikationsterminals (6, 10, 14) übertragen wird, wobei der Acquisitionsburst übertragen wird von dem Kommunikationsterminal (6, 10, 14) und empfangen wird von dem Referenzterminal (9).

27. System nach Anspruch 10, wobei die Bursts einen Steuerburst beinhalten, der eine Verkehrsterminal-(6, 10, 14) -Übertragungssynchronisation aufrechterhält.

28. Verfahren zum Synchronisieren eines Kommunikationsterminals (6, 10, 14) in einem drahtlosen TDMA Kommunikationssystem mit einem Kontroller (7), umfassend die Schritte:
Erzeugen einer Empfangsrahmenzeit zu einem zufälligen Zeitpunkt;
Erzeugen einer Suchöffnung;
Suchen eines Referenzbursts innerhalb des Empfangsrahmens unter Verwendung der Suchöffnung;
Erzeugen einer Übertragungsrahmenperiode und einer Empfangsrahmenperiode, darauf basierend, dass der Referenzburst in der Suchöffnung gefunden wird,
wobei jedes Terminal (6, 10, 14) einen Übertragungsburstzeitplan aufweist, der alle die Bursts definiert, die aktuell von dem Terminal übertragen werden, und einen Empfangsburstzeitplan, der alle die Bursts beinhaltet, die von dem Terminal empfangen werden, so dass Bursts addiert werden oder gelöscht werden zu einem beliebigen Zeitpunkt durch Verwendung der Befehlbursts, die an dem Terminal (6, 10, 14) von dem Kontroller (7) empfangen werden.

29. Verfahren nach Anspruch 28, wobei der Schritt des Suchens des Referenzbursts weiterhin aufweist die Schritte:
Suchen eines eindeutigen Worts innerhalb des Empfangsrahmens und
Vorrücken der Suchöffnung um einen Bruchteil der Rahmenzeit, wenn das eindeutige Wort nicht gefunden wurde, und Wiederholen der Suche.

30. Verfahren nach Anspruch 29, weiterhin umfassend die Schritte:
Abgleichen der Empfangsrahmenzeit basierend auf dem eindeutigen Wort, wenn das eindeutige Wort in dem Rahmen gefunden wird, und
Suchen nach dem Referenzburst unter Verwendung einer Suchöffnung, wobei die Suchöffnung an der erwarteten Position des eindeutigen Worts des Referenzbursts positioniert ist.

31. Verfahren nach Anspruch 30, weiterhin umfassend die drei Schritte:
Suchen nach dem eindeutigen Wort in der Suchöffnung,
Bestimmen, ob Daten, die in dem Referenzburst empfangen werden, fehlerfrei sind, und
Bestimmen, ob eine Rahmennummer in dem Referenzburst in jedem Rahmen inkrementiert ist, wobei, wenn einer der drei Schritte fehlschlägt, das Terminal (6, 10, 14) den Start des Empfangsrahmens abgleicht, um anzufangen, nachdem ein eindeutiges Wort falsch detektiert wurde, und die Schritte des Suchens nach einem eindeutigen Wort wiederholt werden.

32. Verfahren zur Synchronisation eines Kommunikationsterminals (6, 10, 14), wie in Anspruch 28 beschrieben, weiterhin aufweisend die Acquisition eines Terminals (6, 9, 10, 13, 14) unter Verwendung der Schritte:
Wählen eines nichtverwendeten Acquisitionsbursts aus einem Pool von Acquisitionsbursts,
Übertragen eines Acquisitionsbefehls von dem Kontroller (7) an das Terminal (6, 9, 10, 13, 14) einschließlich der Parameter für das ausgewählte Acquisitionsburst,
nach Empfangen des Acquisitionsbefehls an dem Terminal (6, 9, 10, 13, 14), Erzeugen eines Übertragungsrahmenversatzes und einer Übertragungsrahmen-ID an dem Terminal (6, 9, 10, 13, 14),
Übertragen einer Acquisitionsantwort von dem Terminal (6, 9, 10, 13, 14) an den Kontroller (7), wobei die Acquisitionsantwort die Terminal-(6, 9, 10, 13, 14) - ID beinhaltet, die Übertragungsrahmen-ID und die aktuelle Verzögerungsabschätzung.

33. Verfahren nach Anspruch 32, weiterhin umfassend die Schritte:
Starten eines Zeitgebers an dem Terminal (6, 9, 10, 13, 14),
Empfangen einer Acquisitionsantwort an den Kontroller (7) und
Übertragen eines Synchronisationsbefehls einschließlich eines eindeutigen Wortfehlers und Übertragungsrahmen-ID-Korrektur an das Verkehrsterminal (6, 10, 14), wobei, wenn der Synchronisationsbefehl von dem Terminal (6, 9, 10, 13, 14) empfangen wird, das Terminal (6, 9, 10, 13, 14) die Übertragungsrahmen-ID-Korrektur auf seine Übertragungsrahmen-ID anwendet und die Übertragungssynchronisation beginnt.

34. Verfahren nach Anspruch 33, wobei, wenn das Terminal (6, 9, 10, 13, 14) keinen Synchronisationsbefehl erhält und der Zeitgeber AUS schaltet, das Terminal (6, 9, 10, 13, 14) auf einen anderen Acquisitionsbefehl wartet.

35. Verfahren nach Anspruch 34, wobei das Terminal (6, 9, 10, 13, 14) Synchronisation durch Übertragungskontrollbursts aufrechterhält.

## Revendications

1. Système de communication sans fil à accès multiple à répartition dans le temps (TDMA) qui comprend :
un terminal de communication (TT) (6, 10, 14) destiné à communiquer des signaux sur des salves au sein d'une trame TDMA ; et
un contrôleur (NCC) (7) destiné à coordonner les communications par ledit terminal (6, 10, 14), dans lequel le terminal (6, 101, 14) comprend :
un moyen de génération d'un moment de trame de réception à un moment arbitraire,
un moyen de génération d'une fenêtre de recherche d'une salve de référence au sein de ladite trame de réception,
un moyen de génération d'une période de trame de transmission et d'une période de trame de réception sur la base de la découverte de ladite salve de référence au sein de ladite fenêtre de recherche,
dans lequel chaque terminal (6, 10, 14) possède un calendrier de salves de transmission qui définit toutes les salves en cours de transmission par le terminal, et un calendrier de salves de réception qui comprend toutes les salves reçues par le terminal, de sorte que des salves soient ajoutées ou supprimées à n'importe quel moment à l'aide des salves de commande reçues au niveau du terminal (6, 10, 14) de la part dudit contrôleur (7).

2. Système selon la revendication 1, dans lequel ledit terminal (6, 10, 14) recherche un mot unique dans ladite trame de réception et avance au sein de ladite fenêtre de recherche selon une fraction de la durée de la trame si ledit mot unique n'est pas trouvé, et répète la recherche.

3. Système selon la revendication 2, dans lequel ledit terminal (6, 10, 14) ajuste la durée de ladite trame de réception sur la base dudit mot unique si ledit mot unique est trouvé au sein de ladite trame, et recherche ladite salve de référence à l'aide d'une fenêtre de recherche, ladite fenêtre de recherche étant positionnée à l'emplacement prévu dudit mot unique de ladite salve de référence.

4. Système selon la revendication 3, dans lequel ledit terminal (6, 10, 14) recherche ledit mot unique dans la fenêtre de recherche et détermine si les données reçues dans la salve de référence sont dépourvues d'erreur, et si un nombre de trames dans ladite salve de référence est augmenté au sein de chaque trame, moyennant quoi, en cas d'échec d'une quelconque desdites trois étapes, ledit terminal (6, 10, 14) ajuste le début de la trame de réception afin qu'il commence après un mot unique détecté par erreur, et répète l'étape de recherche d'un mot unique.

5. Système selon la revendication 1, dans lequel ledit contrôleur (7) est capable de choisir une salve d'acquisition inutilisée parmi un groupe de salves d'acquisition, et de transmettre une commande d'acquisition dudit contrôleur (7) vers ledit terminal (6, 10, 14), y compris les paramètres relatifs à ladite salve d'acquisition choisie, et, après réception de ladite commande d'acquisition au niveau dudit terminal (6, 10, 14), de générer un décalage de trame de transmission et un ID de trame de transmission au niveau du terminal (6, 10, 14), et de transmettre une réponse d'acquisition depuis ledit terminal (6, 10, 14) vers ledit contrôleur (7), moyennant quoi ladite réponse d'acquisition comprend l'ID du terminal (6, 10, 14), l'ID de la trame de transmission, et l'estimation du retard en cours.

6. Système selon la revendication 5, dans lequel ledit terminal (6, 10, 14) comprend une minuterie, et ladite minuterie est lancée après l'envoi de ladite réponse d'acquisition.

7. Système selon la revendication 6, dans lequel ledit contrôleur (7) reçoit ladite réponse d'acquisition et transmet une commande de synchronisation qui comprend une erreur de mot unique et une correction d'ID de trame de transmission au terminal de trafic (6, 10, 14), moyennant quoi, si ladite commande de synchronisation est reçue par le terminal (6, 10, 14), le terminal (6, 10, 14) applique la correction d'ID de trame de transmission à son ID de trame de transmission et lance la synchronisation de transmission.

8. Système selon la revendication 7, dans lequel, si ledit terminal (6, 10, 14) ne reçoit pas ladite commande de synchronisation, ladite minuterie s'arrête et ledit terminal (6, 10, 14) attend une autre commande d'acquisition.

9. Système selon la revendication 7, dans lequel ledit terminal (6, 10, 14) maintient la synchronisation en transmettant des salves de commande audit contrôleur (7).

10. Système de communication sans fil à accès multiple à répartition dans le temps selon la revendication 1, dans lequel
ledit système comprend en outre un terminal de référence (9) relié audit contrôleur (7) afin de transmettre et de recevoir lesdits signaux sur lesdites salves, dans lequel lesdites salves possèdent des paramètres qui peuvent être modifiés dynamiquement par ledit contrôleur (7).

11. Système selon la revendication 10, dans lequel lesdits paramètres peuvent être modifiés sensiblement en temps réel.

12. Système selon la revendication 11, dans lequel lesdits paramètres comprennent l'un d'une longueur, d'une fréquence, ou d'un emplacement au sein d'une trame.

13. Système selon la revendication 10, dans lequel ledit terminal de référence (9) transmet une salve de référence audit terminal de communication (6, 10, 14), et ladite salve de référence est utilisée pour dériver une synchronisation de réseau au niveau dudit terminal de communication (6, 10, 14), et ladite salve de référence peut être située n'importe où dans la trame de transmission.

14. Système selon la revendication 13, dans lequel la trame est une trame programmable à période fixe.

15. Système selon la revendication 13, dans lequel ledit terminal de communication (6, 10, 14) comprend une horloge locale et génère une période de trame de transmission et une période de trame de réception en réponse à ladite salve de référence.

16. Système selon la revendication 13, qui comprend en outre :
une pluralité de terminaux de communication (6, 10, 14), ladite pluralité de terminaux (6, 10, 14) étant séparée en groupes de commande, et ledit terminal de référence (9) transmettant une salve de référence distincte à chaque groupe de commande, chaque salve de référence distincte étant transmise sur différentes porteuses (0, 1, 2, 3, 4, 5) à une fréquence différente, et ne se chevauchant pas dans le temps avec les autres.

17. Système selon la revendication 16, dans lequel ladite pluralité de terminaux (6, 10, 14) comprend une horloge locale et génère un moment de début de période de trame de transmission et un moment de réception de période de trame de transmission en réponse à ladite salve de référence, et ledit moment de début de période de trame de transmission est identique sur lesdites différentes porteuses (0, 1, 2, 3, 4, 5) .

18. Système selon la revendication 13, dans lequel ledit terminal de communication (6, 10, 14) détermine une fenêtre de temps pendant laquelle une salve doit être recherchée.

19. Système selon la revendication 18, dans lequel ledit terminal de communication (6, 10, 14) génère une fenêtre de recherche qui possède un premier temps de garde lorsque ledit terminal (6, 10, 14) acquiert la synchronisation par rapport audit système de réseau, et génère une fenêtre de recherche qui possède un second temps de garde inférieur audit premier temps de garde dès que la synchronisation a été acquise.

20. Système selon la revendication 18, dans lequel ladite salve de référence comprend une partie de mot unique et ledit terminal de communication (6, 10, 14) recherche ledit mot unique dans ladite fenêtre et détecte ledit mot unique si un mot unique stocké au niveau dudit terminal de communication (6, 10, 14) correspond au mot unique trouvé dans ladite fenêtre.

21. Système selon la revendication 20, dans lequel le nombre maximal d'erreurs autorisé pour la détection d'un mot unique est défini comme un premier seuil ou comme un second seuil, et ledit premier seuil est utilisé pendant l'acquisition de la synchronisation du système, et ledit second seuil est utilisé après que l'acquisition ait été établie, ledit premier seuil étant inférieur audit second seuil.

22. Système selon la revendication 13, qui utilise un premier et un second mots uniques, ledit premier mot unique étant utilisé dans une salve de référence et ledit second mot unique étant utilisé dans toutes les autres salves.

23. Système selon la revendication 10, dans lequel lesdites salves comprennent une salve de référence transmise par ledit terminal de référence (9), et sont reçues par ledit terminal de communication (6, 10, 14) qui achemine des messages de gestion de réseau depuis ledit contrôleur de commande de réseau (7), et sont également utilisées par tous les terminaux de réception (6, 10, 14) afin de dériver la synchronisation de trames.

24. Système selon la revendication 10, dans lequel lesdites salves comprennent une salve de signalisation transmise par ledit terminal de communication (6, 10, 14) et sont utilisées pour acheminer des messages de gestion de réseau entre le terminal de communication (6, 10, 14) et ledit contrôleur de commande de réseau (7) ou ledit terminal de référence (9).

25. Système selon la revendication 10, dans lequel lesdites salves comprennent des salves de trafic qui sont transmises par ledit terminal de communication (6, 10, 14) et le terminal de référence (9), et reçues par ledit terminal de communication (6, 10, 14) et le terminal de référence (9), et acheminent des données de trafic.

26. Système selon la revendication 10, dans lequel lesdites salves comprennent une salve d'acquisition utilisée pendant l'acquisition de transmission du terminal de communication (6, 10, 14), ladite salve d'acquisition étant transmise par ledit terminal de communication (6, 10, 14) et reçue par ledit terminal de référence (9).

27. Système selon la revendication 10, dans lequel lesdites salves comprennent une salve de commande qui maintient la synchronisation de transmission d'un terminal de trafic (6, 10, 14).

28. Procédé de synchronisation d'un terminal de communication (6, 10, 14) dans un système de communication à accès multiple à répartition dans le temps qui possède un contrôleur (7), qui comprend les étapes qui consistent à :
générer un moment de trame de réception à un moment arbitraire ;
générer une fenêtre de recherche ;
rechercher une salve de référence dans ladite trame de réception à l'aide de ladite fenêtre de recherche ;
générer une période de trame de transmission et une période de trame de réception sur la base de la découverte de ladite salve de référence dans ladite fenêtre de recherche,
dans lequel chaque terminal (6, 10, 14) possède un calendrier de salves de transmission qui définit toutes les salves en cours de transmission par le terminal, et un calendrier de salves de réception qui comprend toutes les salves reçues par le terminal, de sorte que des salves soient ajoutées ou supprimées à n'importe quel moment à l'aide des salves de commande reçues au niveau du terminal (6, 10, 14) de la part dudit contrôleur (7).

29. Procédé selon la revendication 28, dans lequel l'étape de recherche de ladite salve de référence comprend en outre les étapes qui consistent à :
rechercher un mot unique dans ladite trame de réception ; et
avancer dans ladite fenêtre de recherche selon une fraction de la durée de la trame si ledit mot unique n'est pas trouvé, et répéter ladite recherche.

30. Procédé selon la revendication 29, qui comprend en outre les étapes qui consistent à :
ajuster ladite trame de réception sur la base dudit mot unique si ledit mot unique est trouvé dans ladite trame ; et
rechercher ladite salve de référence à l'aide d'une fenêtre de recherche, ladite fenêtre de recherche étant positionnée à l'emplacement prévu dudit mot unique de ladite salve de référence.

31. Procédé selon la revendication 30, qui comprend en outre les trois étapes qui consistent à :
rechercher ledit mot unique dans la fenêtre de recherche ;
déterminer si les données reçues dans la salve de référence sont dépourvues d'erreur ; et
déterminer si le nombre de trames dans ladite salve de référence est augmenté au sein de chaque trame, moyennant quoi, en cas d'échec d'une quelconque desdites trois étapes, ledit terminal (6, 10, 14) ajuste le début de la trame de réception afin qu'il commence après un mot unique détecté par erreur, et répète l'étape de recherche d'un mot unique.

32. Procédé de synchronisation d'un terminal de communication (6, 10, 14) selon la revendication 28, qui comprend en outre l'acquisition d'un terminal (6, 9, 10, 13, 14) à l'aide des étapes qui consistent à :
choisir une salve d'acquisition inutilisée parmi un groupe de salves d'acquisition ;
transmettre une commande d'acquisition entre le contrôleur (7) et le terminal (6, 9, 10, 13, 14), qui comprend les paramètres relatifs à ladite salve d'acquisition choisie ;
après avoir reçu la commande d'acquisition au niveau du terminal (6, 9, 10, 13, 14), générer un décalage de trame de transmission et un ID de trame de transmission au niveau du terminal (6, 9, 10, 13, 14) ;
transmettre une réponse d'acquisition du terminal (6, 9, 10, 13, 14) vers le contrôleur (7), ladite réponse d'acquisition comprenant l'ID du terminal (6, 9, 10, 13, 14), l'ID de la trame de transmission et l'estimation du retard en cours.

33. Procédé selon la revendication 32, qui comprend en outre les étapes qui consistent à :
lancer une minuterie au niveau du terminal (6, 9, 10, 13, 14) ;
recevoir ladite réponse d'acquisition au niveau du contrôleur (7) ; et
transmettre une commande de synchronisation qui comprend une erreur de mot unique et une correction d'ID de trame de transmission au terminal de trafic (6, 10, 14), moyennant quoi, si ladite commande de synchronisation est reçue par le terminal (6, 9, 10, 13, 14), le terminal (6, 9, 10, 13, 14) applique la correction d' ID de trame de transmission à son ID de trame de transmission et lance la synchronisation de transmission.

34. Procédé selon la revendication 33, dans lequel, si ledit terminal (6, 9, 10, 13, 14) ne reçoit pas ladite commande de synchronisation et si ladite minuterie s'arrête, le terminal (6, 9, 10, 13, 14) attend une autre commande d'acquisition.

35. Procédé selon la revendication 34, dans lequel le terminal (6, 9, 10, 13, 14) maintient la synchronisation en transmettant des salves de commande.
